# EUROPÄISCHE PATENTANMELDUNG

(11) **EP 4 814 344 A1**
(43) Veröffentlichungstag der Anmeldung: **30.09.2026**
(21) Anmeldenummer: 25165968.6
(22) Anmeldetag: 25.03.2025
(51) Int. Cl.: F16H 57/04, F16H 57/02

(54) **ADAPTERGEHÄUSE FÜR MOTOR-GETRIEBE-ANORDNUNG**

(71) Anmelder: Flender GmbH, 46395 Bocholt (DE); Flender Industriegetriebe GmbH, 09322 Penig (DE)
(72) Erfinder: BRUNS, Christoph, 46395 Bocholt (DE); KIEBEL, Jens, 46395 Bocholt (DE); SCHROER, Dirk, 46395 Bocholt (DE)
(74) Vertreter: Michalski Hüttermann & Partner mbB

(57) **Zusammenfassung**

Adaptergehäuse 10 zum Adaptieren eines Antriebsmotors 60 an ein Industriegetriebe 52, umfassend ein entlang einer Mittelachse A_{M} sich erstreckendes und umfänglich verlaufendes Gehäuseelement 12 mit jeweils endseitig ausgebildeten Anschlussflanschen 14, wobei eine Umfangskontur des Gehäuseelements 12 mehreckig ausgeformt ist, und ein innerhalb des Gehäuseelements 12 in einer Transversalebene zu der Mittelachse Aₘ angeordnetes und an eine Innenfläche 16 des Gehäuseelements 12 angepasstes Trennelement 20. Bevorzugt ist die Umfangskontur achteckig geformt. Eine mehreckige Form des Adaptergehäuses 10 stellt eine effiziente Abwandlung eines hohlzylindrischen Adaptergehäuses dar, da es sowohl ebene Anbauflächen gibt, an welchen ohne größeren Aufwand Zusatzkomponenten installiert werden können, als auch die äußere Form einem Zylinder nahe genug kommt, um einen seitlichen Überstand zu dem Getriebe 52 zu gewährleisten, sodass der Luftstrom seitlich am Getriebegehäuse 12 vorbeiströmen kann.

## Beschreibung

Die Erfindung betrifft Adaptergehäuse zum Adaptieren eines Antriebsmotors an ein Industriegetriebe, mit einem entlang einer Mittelachse A_{M} sich erstreckenden und umfänglich verlaufendes Gehäuseelement mit jeweils endseitig ausgebildeten Anschlussflanschen und einem innerhalb des Gehäuseelements angeordneten Trennelement, um eine Luftführung zu gewährleisten.

Im Betrieb erzeugen Industriegetriebe eine Verlustleistung in Form von Wärme. Die Wärme muss vom Getriebe an die Umgebung abgeführt werden, damit es nicht überhitzt und Komponenten im Getriebeinneren dadurch versagen. Eine Möglichkeit die Wärme eines Getriebes abzuführen stellt ein Lüfter dar. Dieser Lüfter ist in der Regel auf die Getriebe-Eingangswelle aufgesetzt, so dass der Lüfter permanent angetrieben ist. Der Lüfter kann in einem Adaptergehäuse integriert bzw. von diesem eingehaust sein. Ein Adaptergehäuse bestehen i.d.R. aus zwei sich gegenüberliegenden Flanschen, einem motorseitigen und einem getriebeseitigen Flansch, welche durch einen zumindest annähernd hohlzylindrischen Körper miteinander verbunden sind. Das Adaptergehäuse dient somit als verbindendes Bauteil zwischen Getriebe und Antriebsmotor. Ein solches Adaptergehäuse zeigt beispielsweise die DE 10 2015 011 163 B4. Im Inneren des Adaptergehäuses befindet sich neben dem Lüfter ein Blechteil, das als Trennelement fungiert und welches die angesaugte Luft von der abströmenden Luft trennt. Es unterstützt somit die Ausbildung eines gerichteten Luftstroms in Richtung des Getriebes, sodass die Wärme effizienter abgeführt werden kann. Die Befestigung des Trennelements auf dem Innenumfang des hohlzylindrischen Körpers des Adaptergehäuses führt zu hohen Fertigungskosten und einem hohen Montageaufwand. Es besteht demnach ein ständiges Bedürfnis eine fertigungstechnische und montageseitige Vereinfachung zu erzielen.

Es ist die Aufgabe der Erfindung Maßnahmen aufzuzeigen, die für das Adaptergehäuse eine fertigungstechnische und montageseitige Vereinfachung zu ermöglichen und die Effizienz der Kühlung zu erhöhen.

Die Lösung der Aufgabe erfolgt durch ein Adaptergehäuse mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Adaptergehäuse zum Adaptieren eines Antriebsmotors an ein Industriegetriebe, umfassend ein entlang einer Mittelachse A_{M} sich erstreckendes und umfänglich verlaufendes Gehäuseelement mit jeweils endseitig ausgebildeten Anschlussflanschen, wobei eine Umfangskontur des Gehäuseelements mehreckig ausgeformt ist, und ein innerhalb des Gehäuseelements in einer Transversalebene zu der Mittelachse A_{M} angeordnetes und an eine Innenfläche des Gehäuseelements angepasstes Trennelement.

Eine mehreckige Form des Adaptergehäuses stellt eine effiziente Abwandlung eines hohlzylindrischen Adaptergehäuses dar, da es sowohl ebene Anbauflächen gibt, an welchen ohne größeren Aufwand Zusatzkomponenten installiert werden können, als auch die äußere Form einem Zylinder nahe genug kommt, um einen seitlichen Überstand zu dem Getriebe zu gewährleisten, sodass der Luftstrom seitlich am Getriebegehäuse vorbeiströmen kann, um beispielsweise Lagerungen zu erreichen. Das Trennelement weist eine zentrische Ausstanzung auf, durch die der zwischen Antriebsmotor und Getriebe verlaufende Antriebsstrang geführt ist. Die zentrische Ausstanzung dient außerdem dazu die Kühlluft von der Ansaugseite zu der Abströmseite zu leiten. Bevorzugt ist, dass das Trennelement im Übrigen keine Öffnungen besitzt, über die sich eine nennenswerte Menge an Kühlluft zwischen der Ansaugseite und der Abströmseite austauschen kann.

In einer bevorzugten Ausgestaltung ist die um die Mittelachse A_{M} verlaufende Umfangskontur des Adaptergehäuses achteckig ausgeführt bzw. geformt. Eine achteckige Form kommt der herkömmlichen hohlzylindrische Form sehr nahe. Insbesondere ist gewährleistet, dass ein radialer Freiraum zwischen Adaptergehäuse und der Umhüllenden des im Inneren umlaufenden Lüfters weiterhin sehr gering ist, so dass Zonen, in denen eine ungewollte Beruhigung des Luftstroms stattfinden kann, zumindest auf ein Minimum beschränkt werden. Zudem stellt die achteckige Form gerade, d.h. nicht gekrümmt, Flächen zur Verfügung, so dass über diese Flächen Anbauteile einfach befestigt werden können und zwar sowohl außen als auch innen. Die achteckige Form gewährleistet weiterhin einen ausreichenden seitlichen Überstand des Adaptergehäuses gegenüber dem Getriebegehäuse, so dass Kühlluft im Bereich des Überstand in Richtung der äußeren Seiten des Getriebegehäuses austreten kann.

Fertigungstechnisch ist eine Ausgestaltung bevorzugt, bei der das Gehäuseelement aus zwei in einer Axialebene zu der Mittelachse A_{M} zusammengesetzten Gehäusehälften gebildet ist. Hierdurch ist es möglich, die beiden Gehäusehälften in dem gleichen Fertigungsschritt herzustellen, um sie anschließend, ebenfalls in einer bevorzugten Ausgestaltung, in jeweils in der Axialebene nach dem Aneinandersetzen der Hälften gebildeten Stoßbereichen miteinander zu verschweißen.

In einer bevorzugten Ausgestaltung bildet das Trennelement mehrere gegenüber der Transversalebenen abgewinkelte Abkantungen aus. Unter Abkantung soll ein Bereich des Trennelements verstanden werden, die aus dem gleichen Material, insbesondere einem Blechmaterial, besteht und unter einem Winkel gegenüber dem transversal angeordneten Bereich steht. Durch die Abkantungen ergibt sich eine erhöhte Steifigkeit des Trennelements. Außerdem ist eine optimierte Luftführung dadurch gegeben, dass der Übergang von dem transversalen Bereich über die Abkantungen auf die Innenfläche des Adaptergehäuses nun nicht mehr von scharfen Richtungswechseln gekennzeichnet ist. Daraus resultiert insgesamt ein besser in Richtung des Getriebes geführter Luftstrom und somit eine bessere Wärmeabfuhr. Insbesondere ist bevorzugt, dass die Anzahl der Abkantungen der Anzahl der Ecken der Umfangskontur des Gehäuseelements entspricht. Hierdurch ist gewährleistet, dass sich das Trennelement zumindest nahezu vollständig an die Innenfläche des Gehäuseelements anpasst und eine gleichmäßige Luftführung ermöglicht wird. In konkreter Ausgestaltung der Abkantungen kann vorgesehen sein, dass diese gegenüber der Transversalebene jeweils unter einen Winkel zwischen 20° und 80°, insbesondere 30° bis 60°, stehen.

In einer bevorzugten Ausgestaltung sind die Abkantungen gegenüber der Innenfläche des Gehäuseelements befestigt, insbesondere geklemmt oder verschraubt. Bevorzugt ist das Trennelement neben der Biegung der Abkantung ein weiteres Mal gebogen bzw. abgewinkelt, so dass hiermit Laschen bereitgestellt werden, über welche die Abkantungen und damit das gesamten Trennelement gegenüber dem Gehäuseelement des Adaptergehäuses verbunden werden können. Als Befestigungselemente können beispielsweise Halteklammern vorgesehen sein, die gegenüber dem Gehäuseelement verschraubt sind und die Abkantungen, insbesondere durch eine zweite Biegung entstandenen Laschen, klemmen. Das Blech der jeweiligen Abkantung kann mit einer entsprechenden Lasche auf die Halteklammer aufgeschoben werden, sodass kleine Versätze durch Fertigungsabweichungen ohne Probleme ausgeglichen werden können. Der Montage- und Demontageprozess besteht anstatt dem Anziehen bzw. Lösen von Schrauben und Muttern nur aus einem Aufschieben bzw. Herausziehen des Trennelements aus den Halteklammern.

In einer zudem bevorzugten Ausgestaltung sind benachbarte Abkantungen zumindest abschnittsweise untereinander verbunden. Hierbei kann insbesondere vorgesehen sein, dass die benachbarten Abkantungen über eine Schweißung miteinander verbunden sind. Hierdurch kann das Trennelement bei Bedarf weiter stabilisiert werden.

Die Aufgabe wird außerdem gelöst durch eine Motor-Getriebe-Anordnung für eine Industrieanwendung, umfassend einen Antriebsmotor mit einer Ausgangswelle, ein Industriegetriebe mit einer mit der Ausgangswelle des Antriebsmotors verbundenen Eingangswelle, wobei auf der Eingangswelle drehfest ein Lüfterrad angeordnet ist, wobei der Antriebsmotor über ein Adaptergehäuse wie beschrieben mit dem Industriegetriebe verbunden ist. Insbesondere sind die Abkantungen gegenüber der Transversalebene in Richtung des Lüfterrads abgewinkelt. Das Trennelement erstreckt sich kegelförmig bzw. öffnet sich in Richtung des Getriebes, sodass der Luftstrom über die schrägen, sich öffnenden Abkantungen in Richtung des Getriebes gedrückt wird. In einer besonders vorteilhaften Ausgestaltung kann vorgesehen sein, dass sich die Abkantungen zumindest bis in eine durch das Lüfterrad gebildete zweite Transversalebene erstrecken.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine Motor-Getriebe-Anordnung mit einem Adaptergehäuse,
- Fig. 2:: einen Halbschnitt eines Adaptergehäuses,
- Fig. 3:: eine Ansicht eines Adaptergehäuses und
- Fig. 4, 5:: Detaillierungen und Einzelheiten eines Adaptergehäuses.

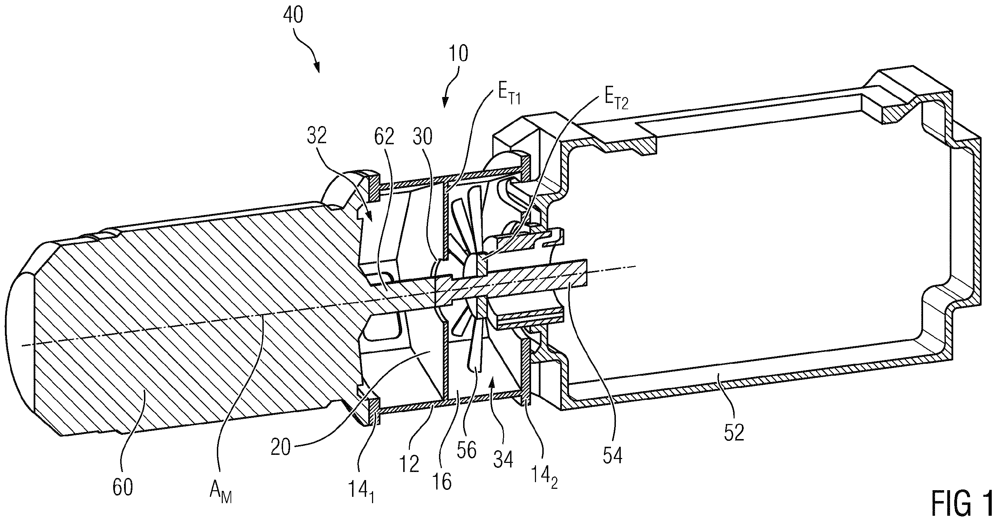

Die Figur 1 zeigt eine Motor-Getriebe-Anordnung 50, beispielsweise für eine Industrieanwendung. Die Motor-Getriebe-Anordnung 50 weist einen Antriebsmotor 60 mit einer Motorwelle, die auch als Ausgangswelle 62 bezeichnet werden kann, und ein Industriegetriebe 50 mit einer Eingangswelle 54 auf. Antriebsmotor 60 und Getriebe 52 sind nur schematisch dargestellt. Ausgangswelle 62 und Eingangswelle 54 sind zur Übertragung eines Antriebsmoments miteinander verbunden, wobei die Art der Verbindungsmittel vorliegend keiner weiteren Erörterung bedürfen. Zudem ist auf der Eingangswelle 54 des Getriebes 52 drehfest ein Lüfterrad 56 gehalten. Während eines Betriebs der Motor-Getriebe-Anordnung 50 läuft das Lüfterrad 56 folglich mit der gleichen Drehzahl wie die Eingangswelle 54 um. Außerdem ist ein Adaptergehäuse 10 vorgesehen, über das der Antriebsmotor 60 und das Getriebe 52 miteinander verbunden sind. Das Adaptergehäuse 10 haust die beiden Wellen 54, 62 und das Lüfterrad 56 zumindest weitestgehend ein. Die Ausgangswelle 62 des Antriebsmotors 60 und die Eingangswelle 54 des Getriebes 52 liegen in einer Mittelachse A_{M}, die eine Hauptrichtung der Motor-Getriebe-Anordnung 50 definiert. Das Lüfterrad 56 ist mit der Eingangswelle 54 um die Mittelachse A_{M} rotierend angetrieben.

Das Adaptergehäuse 10 weist ein Gehäuseelement 12 auf, das sich konzentrisch zu der Mittelachse A_{M} erstreckt. Das Gehäuseelement 12 bildet endseitig Anschlussflansche 14₁, 14₂ aus, zum jeweiligen Anschluss des Adaptergehäuses 10 an den Antriebsmotor 60 und an das Getriebe 52. Eine zu der Mittelachse A_{M} konzentrische und umlaufende Umfangskontur des Gehäuseelements 12 ist vorliegend achteckig ausgeformt, wobei ein regelmäßiges Achteck beschrieben wird. Das Adaptergehäuse 10 umfasst ferner ein Trennelement 20. Das Trennelement 20 ist innerhalb des Gehäuseelements 12 in einer ersten Transversalebene E_{T1} zu der Mittelachse A_{M} angeordnet. Das Trennelement 20 ist an eine Innenfläche 16 des Gehäuseelements 12 angeformt und an dieser befestigt. Wie noch beschrieben wird, kann das Trennelement 20 Bereiche aufweisen, die aus der ersten Transversalebene E_{T1} herausragen. Das Trennelement 20 bildet eine zentrische Ausstanzung 30 aus, durch die die Eingangswelle 54 und/oder die Ausgangswelle 62 geführt sind. Das Trennelement 20 teilt folglich das Innere des Gehäuseelements 12 in zwei Bereiche 32, 34, wobei das Lüfterrad 56 in dem getriebeseitigen Bereich 34 angeordnet ist. Das Lüfterrad 56 ist demnach axial beabstandet zu dem Trennelement 20 in einer zweiten Transversalebene E_{T2} zu der Mittelachse A_{M} angeordnet.

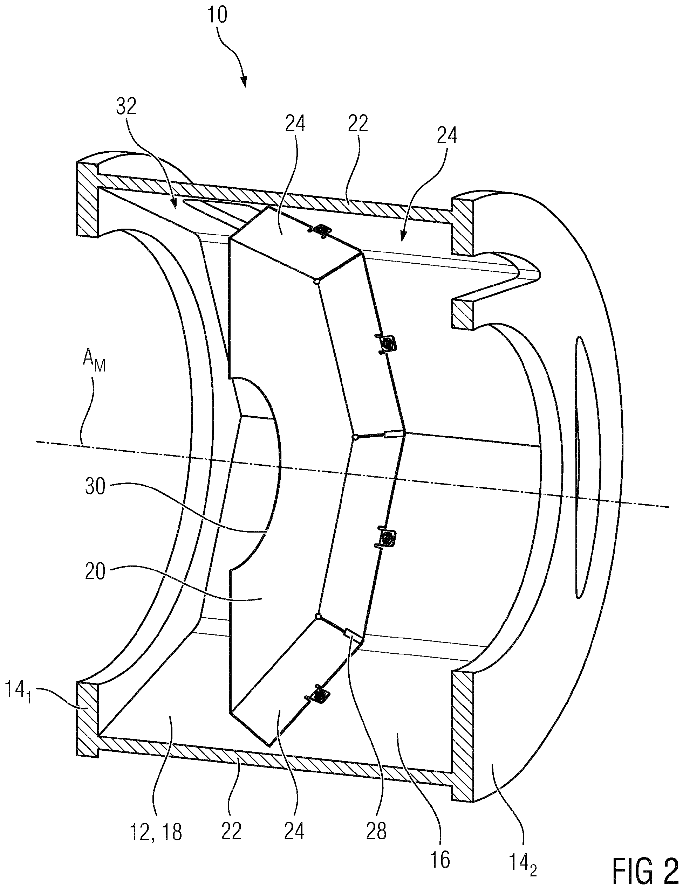

Die Figur 2 zeigt ein Adaptergehäuse 10 als Einzelheit in einem perspektivischen Halbschnitt. Es ist ein Trennelement 20 in einer möglichen Ausgestaltung dargestellt. Das Gehäuseelement 12 ist aus zwei in einer Axialebene zu der Mittelachse A_{M} zusammengesetzten Gehäusehälften 18 gebildet. Infolge des gezeigten Halbschnitts ist nur die eine der beiden Gehäusehälften 18 gezeigt. Die Gehäusehälften 18 können beispielsweise in jeweils in der Axialebene gebildeten Stoßbereichen 22, die durch das gegeneinandersetzen der beiden Gehäusehälften 18 entstehen, miteinander verschweißt sein.

Das Trennelement 20 bildet mehrere gegenüber der ersten Transversalebenen E_{T1} abgewinkelte Abkantungen 24 aus. Vorliegend sind acht, folglich eine der achteckigen Form der Umfangskontur entsprechende Anzahl, Abkantungen 24 vorgesehen. Die Abkantungen 24 sind gegenüber der Transversalebene E_{T1} in den Bereich 34 bzw. in Richtung des Lüfterrads 56, vgl. Figur 1, abgewinkelt. Die Abkantungen 24 stehen bei der vorliegend gezeigten Ausführung bezogen auf die erste Transversalebene E_{T1} unter 45°. Dies bedeutet, dass das Trennelement 20, ausgehend von dem transversal angeordneten Teil, über einen Winkel von 45° auf die Abkantungen 24 und von diesen über einen weiteren Winkel von 45° auf die Innenfläche 16 des Gehäuseelements 12 übergeht. Es können allerdings auch anderen Ausführungen vorgesehen sein, bei denen die Abkantungen 24 gegenüber der Transversalebene E_{T1} jeweils unter einen Winkel zwischen 20° und 80°, insbesondere 30° bis 60°, stehen. Benachbarte Abkantungen 24 sind zumindest abschnittsweise untereinander verbunden. Hierbei kann vorgesehen sein, dass die benachbarten Abkantungen 24 über eine Schweißung 28, beispielsweise als Schweißpunkt oder -naht ausgeführt, miteinander verbunden sind. In einer möglichen Ausgestaltung kann vorgesehen sein, dass die Abkantungen 24 sich zumindest bis in die zweite Transversalebene E_{T2} erstrecken, was vorliegend allerdings nicht dargestellt ist.

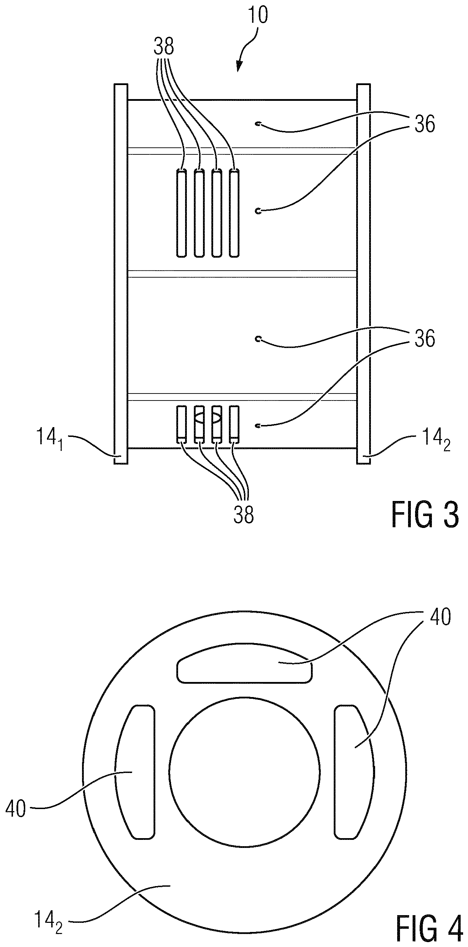

Die Figur 3 zeigt eine Ansicht des Adaptergehäuses 10. Mit dem Bezugszeichen 36 sind Befestigungspunkte der Abkantungen 24 des Trennelements 20 gegenüber dem Gehäuseelement 12 bezeichnet. Ferner bildet das Gehäuseelement 12 mehrere schlitzförmige Ansaugöffnungen 38 aus, über die Kühlluft bei Betrieb des Lüfterrads 56 - in der Figur 3 nicht dargestellt - in den Bereich 32 gelangen kann, um dann im Gehäuseinneren über die Ausstanzung 30 in den zweiten Bereich 34 zu gelangen. Die Kühlluft gelangt dann über von dem getriebeseitigen Anschlussflansch 14₁ ausgebildeten Abströmöffnungen 40 in den seitlichen Getriebebereich, um dort beispielsweise Lagerungen zu kühlen. Der Anschlussflansch 14₁ mit den ausgebildeten Abströmöffnungen 40 ist in der Figur 4 dargestellt.

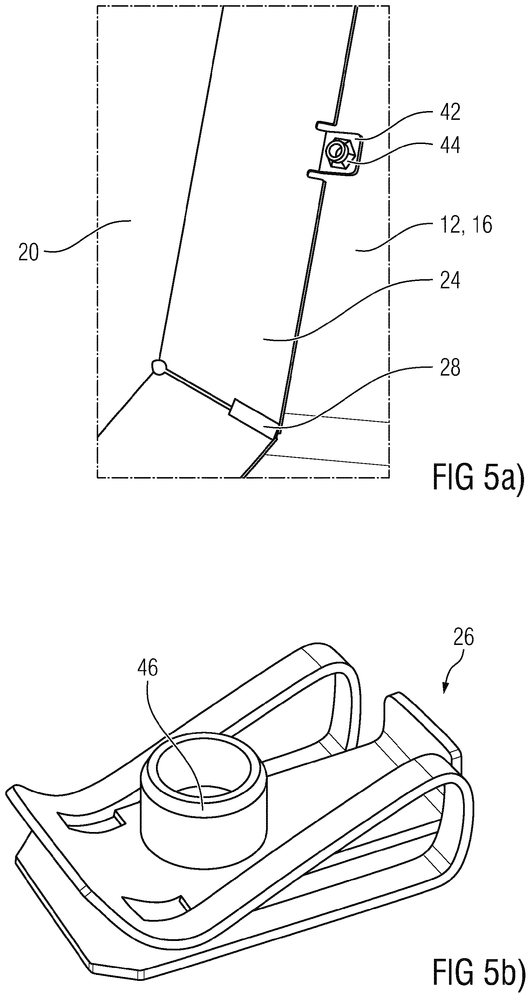

In der Figur 5a) ist eine erste Möglichkeit der jeweiligen Befestigung der Abkantungen 24 gegenüber der Innenfläche 16 des Gehäuseelements 12 gezeigt. Die Abkantung 24 weist hierzu eine abgewinkelte Lasche 42 auf, an der von innen eine Mutter 44 befestigt ist, die von außerhalb des Gehäuseelement 12 angeschraubt werden kann. In der Figur 5b) ist exemplarisch eine Halteklammer 26 gezeigt, über die alternativ die Abkantung 24 gegenüber der Innenfläche 16 des Gehäuseelements 12 befestigt werden kann und zwar indem die jeweilige Lasche 42 in der Halteklammer 26 geklemmt und die Halteklammer 26 mit ihrem Gewindeteil 46 gegenüber dem Gehäuseelement 12 verschraubt wird.

### Bezugszeichenliste

- 10: Adaptergehäuse
- 12: Gehäuseelement
- 14: Anschlussflansch
- 16: Innenfläche
- 18: Gehäusehälfte
- 20: Trennelement
- 22: Stoßbereich
- 24: Abkantung
- 26: Halteklammern
- 28: Schweißung
- 30: Ausstanzung
- 32: Bereich
- 34: Bereich
- 36: Befestigungspunkt
- 38: Ansaugöffnung
- 40: Abströmöffnung
- 42: Lasche
- 44: Mutter
- 46: Gewindeteil
- 50: Motor-Getriebe-Anordnung
- 52: Industriegetriebe
- 54: Eingangswelle
- 56: Lüfterrad
- 60: Antriebsmotor
- 62: Ausgangswelle

## Patentansprüche

1. Adaptergehäuse (10) zum Adaptieren eines Antriebsmotors (60) an ein Industriegetriebe (52), umfassend
ein entlang einer Mittelachse (A_{M}) sich erstreckendes und umfänglich verlaufendes Gehäuseelement (12) mit jeweils endseitig ausgebildeten Anschlussflanschen (14), wobei eine Umfangskontur des Gehäuseelements (12) mehreckig ausgeformt ist, und ein innerhalb des Gehäuseelements (12) in einer Transversalebene (E_{T1}) zu der Mittelachse (A_{M}) angeordnetes und an eine Innenfläche (16) des Gehäuseelements (12) angepasstes Trennelement (20).

2. Adaptergehäuse (10) nach Anspruch 1, **dadurch gekennzeichnet, dass** die Umfangskontur achteckig ausgeführt ist.

3. Adaptergehäuse (10) nach Anspruch 1 oder 2, **dadurch gekennzeichnet, dass** das Gehäuseelement (12) aus zwei in einer Axialebene zu der Mittelachse A_{M} zusammengesetzten Gehäusehälften (18) gebildet ist.

4. Adaptergehäuse (10) nach Anspruch 3, **dadurch gekennzeichnet, dass** die Gehäusehälften (18) in jeweils in der Axialebene gebildeten Stoßbereichen (22) miteinander verschweißt sind.

5. Adaptergehäuse (10) nach einem der Ansprüche 1 bis 4, **dadurch gekennzeichnet, dass** das Trennelement (20) mehrere gegenüber der Transversalebene (E_{T1}) abgewinkelte Abkantungen (24) ausbildet.

6. Adaptergehäuse (10) nach Anspruch 5, **dadurch gekennzeichnet, dass** die Anzahl der Abkantungen (24) der Anzahl der Ecken der Umfangskontur des Gehäuseelements (12) entspricht.

7. Adaptergehäuse (10) nach Anspruch 5 oder 6, **dadurch gekennzeichnet, dass** die Abkantungen (24) gegenüber der Transversalebene (E_{T1}) jeweils unter einen Winkel zwischen 20° und 80°, insbesondere 30° bis 60°, stehen.

8. Adaptergehäuse (10) nach Anspruch 5, 6 oder 7, **dadurch gekennzeichnet, dass** die Abkantungen (24) gegenüber der Innenfläche (16) des Gehäuseelements (12) befestigt, insbesondere geklemmt oder verschraubt, sind.

9. Adaptergehäuse (10) nach Anspruch 9, **dadurch gekennzeichnet, dass** Halteklammern (26) vorgesehen sind, die gegenüber dem Gehäuseelement (12) verschraubt sind und die Abkantungen (24) klemmen.

10. Adaptergehäuse (10) nach einem der Ansprüche 5 bis 9, **dadurch gekennzeichnet, dass** benachbarte Abkantungen (24) zumindest abschnittsweise untereinander verbunden sind.

11. Adaptergehäuse (10) nach Anspruch 10, **dadurch gekennzeichnet, dass** die benachbarten Abkantungen (24) über eine Schweißung (28) miteinander verbunden sind.

12. Motor-Getriebe-Anordnung (50) für eine Industrieanwendung, umfassend einen Antriebsmotor (60) mit einer Ausgangswelle (62),
ein Industriegetriebe (52) mit einer mit der Ausgangswelle (62) des Antriebsmotors (60) verbundenen Eingangswelle (54), wobei auf der Eingangswelle (54) drehfest ein Lüfterrad (56) angeordnet ist, **dadurch gekennzeichnet, dass** der Antriebsmotor (60) über ein Adaptergehäuse (10) nach einem der vorangegangenen Ansprüche mit dem Industriegetriebe (52) verbunden ist.

13. Motor-Getriebe-Anordnung (50) nach Anspruch 12, **dadurch gekennzeichnet, dass** die Abkantungen (24) gegenüber der Transversalebene (E_{T1}) in Richtung des Lüfterrads (56) abgewinkelt sind.

14. Motor-Getriebe-Anordnung (50) nach Anspruch 12 oder 13, **dadurch gekennzeichnet, dass** sich die Abkantungen (24) zumindest bis in eine durch das Lüfterrad (56) gebildete zweite Transversalebene (E_{T1}) erstrecken.
